(19) Europäisches Patentamt
European Patent Office
Office européen des brevets

(11) **EP 2 327 895 A1**

(12) **EUROPÄISCHE PATENTANMELDUNG**

(43) Veröffentlichungstag:
   **01.06.2011 Patentblatt 2011/22**

(51) Int Cl.:
   *F16C 19/52* (2006.01)   *F16C 35/00* (2006.01)
   *G01L 1/18* (2006.01)

(21) Anmeldenummer: **09014802.4**

(22) Anmeldetag: **27.11.2009**

(84) Benannte Vertragsstaaten:
   **AT BE BG CH CY CZ DE DK EE ES FI FR GB GR HR HU IE IS IT LI LT LU LV MC MK MT NL NO PL PT RO SE SI SK SM TR**
   Benannte Erstreckungsstaaten:
   **AL BA RS**

(71) Anmelder: **SIEMENS AKTIENGESELLSCHAFT**
   **80333 München (DE)**

(72) Erfinder:
   • **Biehl, Saskia**
     **38100 Braunschweig (DE)**
   • **Lüneburg, Bernd**
     **45481 Mühlheim an der Ruhr (DE)**

(54) **Lagerungseinrichtung mit Sensor zur Messung der Lageraufstandskraft einer rotierenden Welle**

(57) Es wird eine Lagerungseinrichtung (10) zum Lagern einer Welle bereitgestellt, die aufweist ein Lager (15), eine Abstützstruktur (16) zum Abstützen des Lagers (15), und mindestens ein in die Abstützstruktur (16) integriert eingebrachter piezoresistiver Sensor (24, 30, 50), der im Kraftflussbereich der Lagerungseinrichtung (10) angeordnet ist, wobei mit der auf den Sensor (24, 30, 50) einwirkenden Aufstandskraft des Lagers (15) der elektrische Widerstand des Sensors (24, 30, 50) derart beeinflusst ist, dass am Sensor (24, 30, 50) die Aufstandskraft des Lagers (15) elektrisch abgreifbar ist. Ferner wird ein entsprechendes Verfahren zum Ermitteln der statischen und/oder dynamischen Lageraufstandkräfte der Wellenlager einer Welle, ein Steuerungssystem, sowie die Verwendung eines piezoresistiven Sensors zum Bestimmen der Lageraufstandskraft eines Wellenlagers bereitgestellt.

FIG 2

EP 2 327 895 A1

**Beschreibung**

Die Erfindung betrifft eine Lagerungseinrichtung mit einem Sensor zur Messung der Lageraufstandskraft einer rotierenden Welle. Insbesondere betrifft die Erfindung eine Lagerungseinrichtung mit einem Sensor, mit dem die Aufstandskraft des Lagers elektrisch abgreifbar ist. Ferner betrifft die Erfindung ein Rotorsystem mit einer Lagerungseinrichtung, die den Sensor aufweist. Außerdem betrifft die Erfindung ein entsprechendes Verfahren zum Ermitteln der statischen und/oder dynamischen Lageraufstandkräfte der Welle, ein entsprechendes Steuerungssystem, sowie die Verwendung des Sensors zum Bestimmen der Lageraufstandskraft eines Wellenlagers.

Ein mehrfach gelagertes Rotorsystem ist einfach oder mehrfach statisch überbestimmt. Das bedeutet, dass eine Änderung der geometrischen Lage eines Lagers relativ zur Welle (oder umgekehrt) - im Folgenden Ausrichtung genannt - eine Änderung der Lageraufstandskräfte zur Folge hat. Je nach geometrischer Ausprägung des Welle-Lager-Systems bedingen bereits geringe Ausrichtungsänderungen große Kraftänderungen an den Lagern und in der Folge auch große Änderungen der Biegespannungen im Wellenschaftsystem. Bedingt durch die lastabhängigen dynamischen Eigenschaften von Gleitlagern ändern sich mit der Aufstandskraftverteilung ebenfalls die dynamischen Eigenschaften des derartigen Rotorsystems.

Umgekehrt ermöglicht die Kenntnis der statischen Aufstandskräfte des mehrfach gelagerten Rotorsystems die Bewertung der Ausrichtung der Lager relativ zum Wellensystem. Die Kenntnis der dynamischen Aufstandskräfte ermöglicht die Bewertung des Schwingungszustands des mehrfach gelagerten Rotorsystems.

Ausrichtfehler können zu erhöhten Biegespannungsbelastungen der Welle sowie zu übermäßigen Schwingungen und Lagerschäden führen. Hohe dynamische Aufstandskräfte können ebenfalls zu Lagerschäden oder Folgeschäden an benachbarten oder angeschlossenen Komponenten, wie zum Beispiel Ölleitungen, führen. Die maximal zulässige Schwingungsintensität ist häufig von einem Betreiber spezifiziert. Merkmal der statischen und dynamischen Aufstandskräfte ist es, dass diese sich im Betrieb sowohl kurzzeitig als auch langzeitig verändern können. Kurzzeitige Änderungen sind zum Beispiel durch Aufwärmvorgänge und Laständerungen bedingt. Langzeitige Änderungen werden zum Beispiel durch Kriechverformungen und Setzerscheinungen verursacht. Ferner sind Änderungen der statischen Aufstandskräfte nicht ohne weiteres erkennbar, da sie sich durch unterschiedliche, oft nicht eindeutige Veränderungen des betrieblichen Verhaltens bemerkbar machen. Die dynamischen Aufstandskräfte werden in der Regel durch Schwingungsmessungen ermittelt, deren quantitative Bewertung jedoch nur bei gleichzeitiger Kenntnis der Systemsteifigkeiten möglich und daher mit erheblichen Unsicherheiten behaftet ist.

Die Bestimmung der statischen Lageraufstandskräfte bzw. der Wellenschaftausrichtung relativ zu den Lagern wurde bisher dadurch gelöst, dass die Kupplungen mit keiner oder mit nur einer begrenzten Fehlstellung zueinander gekoppelt werden. Dabei werden die betrieblichen Änderungen jedoch nicht direkt erfasst. Es werden vielmehr indirekte Messungen, wie zum Beispiel Lagertemperaturmessungen, Anhebeöldrücke und Schwingungen gemessen, die einen indirekten Aufschluss über mögliche betriebliche Änderungen der Wellenschaftausrichtung relativ zu den Lagern erlauben. Im Rahmen von Stillständen werden Kupplungen "gebrochen" und die Ausrichtung wird durch Messung der Kupplungsfehlstellung ermittelt. Im Betrieb durchgeführte Verlagerungsmessungen an Maschinenfundamenten bzw. an stehenden Komponenten geben ebenfalls einen Hinweis auf lang- und kurzzeitig auftretende unzulässig hohe Änderungen der Lageraufstandskräfte.

Die dynamischen Lageraufstandskräfte werden durch Schwingungsmessungen ermittelt. Hierzu werden sowohl Relativals auch Absolutschwingungsmessungen durchgeführt. Bei einer Relativschwingungsmessung wird in der Regel die Schwingung der Welle relativ zur Bewegung eines Aufnehmers gemessen. Der Aufnehmer ist am Lager oder am Lagergehäuse befestigt. Bei einer Absolutschwingungsmessung wird die absolute Bewegung im Raum gemessen. Dabei ist der Geber, d.h. ein Sensor bzw. eine Messsonde zur Bestimmung der absoluten Bewegung, in der Regel am Lager oder am Lagergehäuse befestigt. Mittels dieser Messungen und weiteren Annahmen bezüglich der Steifigkeit der Abstützung können Abschätzungen bezüglich der Aufstandsabschätzungen erfolgen.

Den oben erwähnten Methoden ist jedoch gemein, dass sie mit zum Teil erheblichen Unsicherheiten behaftet sind und lediglich Abschätzungen der zu bestimmenden Lageraufstandskraft liefern.

Eine Aufgabe der Erfindung ist es, eine Lagerungseinrichtung, ein Rotorsystem mit der Lagerungseinrichtungen, sowie ein Verfahren zum Messen von statischen und dynamischen Lageraufstandskräften in der Lagerungseinrichtung bereitzustellen, wobei eine genaue Bestimmung der statischen und dynamischen Lageraufstandskräfte ermöglicht ist.

Diese Aufgabe wird gelöst durch eine Lagerungseinrichtung, wie sie in dem unabhängigen Anspruch 1 beschrieben wird, sowie durch eine Rotorsystem, ein Steuerungssystem, ein Verfahren zur Bestimmung der Lageraufstandskraft, und die Verwendung eines Sensors gemäß den nebengeordneten Ansprüchen 7, 8, 10, und 14.

Gemäß dem unabhängigen Anspruch 1 wird eine Lagerungseinrichtung zum Lagern einer Welle geschaffen, wobei die Lagerungseinrichtung ein Lager, eine Abstützstruktur zum Abstützen des Lagers, und mindestens einen in die Abstützstruktur integriert eingebrachten piezoresistiven Sensor aufweist, der im Kraftflussbereich der Lagerungseinrichtung angeordnet ist. Mit der auf den Sensor einwirkenden Aufstandskraft des Lagers wird der elektrische Widerstand des Sensors derart beeinflusst, dass am Sensor die Aufstandskraft des Lagers elektrisch abgreifbar ist.

Die erfindungsgemäße Lagerungseinrichtung hat den Vorteil, dass die Aufstandskraft des Lagers durch direkte Messung bestimmt werden kann. Dies ist insbesondere dadurch bedingt, dass der Sensor in die Abstützstruktur im Kraftfluss integriert eingebracht ist und die zu messende Aufstandskraft somit direkt auf den Sensor einwirkt, der wiederum aufgrund seines druckabhängigen elektrischen Widerstandsverhaltens die auf ihn einwirkende Kraft gemäß seiner druckabhängigen Widerstandscharakteristik elektrisch abgreifbar macht.

Bei piezoresistiven Sensoren, d.h. bei Sensoren mit druckabhängigen elektrischen Widerstandsverhalten, treten keine oder nur geringe Verformungen, beispielsweise im Nanometerbereich, bei Krafteinwirkung auf den Sensor auf. Gleichzeitig wird bei einer Krafteinwirkung auf den Sensor durch eine Änderung des im Sensormaterial herrschenden Drucks bereits eine messbare Änderung des elektrischen Widerstands erzeugt.

Dies bedeutet unter anderem, dass, als ein Vorteil der Erfindung, der Sensor in der Lagerungseinrichtung die Funktion eines tragenden Teils im Kraftflussbereich innerhalb der Abstützstruktur ausübt. Der Sensor ist im Kraftflussbereich angeordnet. Es treten bei der erfindungsgemäßen Lagerungseinrichtung keine strukturellen Einbußen durch das Vorsehen des Sensors auf, da der Sensor in der Abstützstruktur integriert angeordnet ist.

Bei der erfindungsgemäßen Lagerungseinrichtung können vorteilhaft sowohl die statischen als auch die dynamischen Lageraufstandskräfte direkt bestimmt werden. Daraus ergibt sich, im Vergleich zu einer indirekten Messung, eine Verringerung von Unsicherheiten und von Fehleinschätzungen, insbesondere auch im Rahmen der Schwingungsdiagnose. So liefert eine indirekte Messung im Unterschied zur direkten Messung in der Regel nur Anhaltspunkte zur Bestimmung der Lageraufstandskräfte bzw. erlaubt nur ungenaue Aussagen, da der Zusammenhang zwischen den tatsächlichen Lageraufstandskräften und den durch die indirekte Messung gelieferten Messwerten oft nur unvollkommen bekannt ist.

Die Messung kann sowohl im Betrieb als auch bei Stillstand der die Lagerungseinrichtung aufweisenden Maschine erfolgen. Dies ist ein Vorteil insbesondere gegenüber einer Messung mittels eines Dehnungsmessstreifens, denn bei Verwendung eines Dehnungsmessstreifens ist eine Deformation der Messstelle erforderlich, was, falls die Maschine im Betrieb ist, nicht praktikabel bzw. nicht durchführbar wäre.

Da die Erfindung auf einem elektrischen Messprinzip beruht, können Standardauswerte- und Diagnoseverfahren angewandt werden. Der Messwert kann mit Alarm- und Warnwerten verknüpft werden, eine automatisierte Überwachung wird ermöglicht. Eine langzeitige Auswertung der statischen Anteile ermöglicht auch die Erkennung von langzeitigen Ausrichtungsänderungen. Ferner ist die erfindungsgemäße Lösung einsetzbar für alle Maschinentypen und kann einfach umgesetzt werden, da nur stationäre, nicht drehende Komponenten betroffen sind. Die Genauigkeit der Analyse zu allen bekannten Echtzeitverfahren wird wesentlich erhöht.

Gemäß einer Weiterbildung der Erfindung weist der Sensor eine oder mehrere piezoresistive Dünnschichten auf. Ein Vorteil der Dünnschichten in dem Sensor ist, dass die Lagerungseinrichtung bei geringem Materialverbrauch und Volumen mit dem großflächigen Sensor versehen werden kann, bei dem eine relativ große Fläche senkrecht zum Kraftfluss angeordnet ist, so dass eine möglichst sensitive und genaue Druckmessung bzw. Aufstandskraftmessung geliefert wird. Jedoch ist die Erfindung nicht auf Sensoren mit dünnen Schichten, d.h. auf sogenannte Dünnfilmsensoren beschränkt, gegebenenfalls können auch dickere Schichen verwendet werden, was insbesondere auch von der Art des verwendeten Sensormaterials abhängen kann.

Bevorzugt weisen die eine oder mehreren piezoresistiven Dünnschichten eine Schicht aus Diamond Like Carbon (DLC) auf, der amorphen Kohlenstoff aufweist. Dadurch wird eine hohe Sensitivität der Sensoren erreicht. Jedoch ist die Erfindung nicht auf DLC als Sensormaterial beschränkt, und insbesondere nicht auf DLC-Dünnschichtsensoren. Alternativ können auch andere piezoresistive Materialien verwendet werden. Beispielsweise kann auch Silizium verwendet werden.

Bevorzugt weist der Sensor eine oder mehrere Sensorplatten oder Sensorscheiben auf, wobei die piezoresistiven Dünnschichten auf die Sensorplatten bzw. auf die Sensorscheiben aufgebracht sind. Ein Vorteil von Sensorscheiben oder Sensorplatten ist, dass der piezoresistive Sensor mit geringen Toleranzen gefertigt werden kann. Beispielsweise kann zunächst eine Einheit aus einer Sensorscheibe und einer darauf aufgebrachten piezoresistiven Schicht hergestellt werden, wobei die Oberfläche der piezoresistiven Schicht nachbearbeitet werden kann, um eine glatte Kontaktfläche bereitzustellen. Die Einheit aus der Sensorscheibe und der piezoresistiven Schicht wird in eine dafür vorgesehene Aussparung der Abstützstruktur der Lagereinrichtung eingebracht. Ferner können erfindungsgemäß die Dicken der Sensorscheiben derart gewählt werden, dass bei der Lagereinrichtung eine mechanische Vorspannung der piezoresistiven Sensoren erzielt wird. Durch das Vorsehen einer mechanischen Vorspannung kann die Messcharakteristik des Sensors verbessert werden, beispielsweise kann eine lineare Messcharakteristik des eingebauten Sensors erreicht werden.

Bevorzugt ist die Aufstandskraft mittels mindestens einer an den piezoresistiven Dünnschichten anliegenden Kontaktelektrode abgreifbar. Ein Vorteil des Abgreifens durch eine Kontaktelektrode ist, dass die Auswertung der Widerstandsmessung bzw. der Widerstandsänderung, die in dem piezoresistiven Sensor auftritt, genauer bestimmbar ist, da der Einfluss von elektrischen Strömen, die nicht eine piezoresistive Schicht des Sensors durchlaufen und die die piezoresistive Schicht "umgehen", minimiert wird. Jedoch ist die Erfindung nicht auf eine solche direkt anliegende Kontaktelektrode beschränkt. Alternativ kann die Widerstandsänderung des Sensors auch ausschließlich durch nicht direkt an einer piezoresistiven Schicht anliegenden Elektroden bestimmt werden, beispielsweise indem lediglich elektrische Anschlüsse an den Rückseiten, d.h. an den nichtbeschichteten Flächen der Sensorscheiben vorgesehen sind. Jedoch besteht bei einer solchen alternativen Ausführungsform, wie bereits erwähnt, in erhöhtem Maße die Gefahr, dass eine leitende Verbindung zwischen den elektrischen Anschlüssen auftritt, durch die die beabsichtige Widerstandsmessung der piezoelektrischen Schicht verfälscht wird. Bei einem Ausführungsbeispiel wird dieses Problem dadurch gelöst, dass statt dem Vorsehen der direkt anliegenden Kontaktelektrode der Sensor in eine Aussparung mit nicht-leitenden Oberflächen integriert wird.

Bevorzugt ist der piezoresistive Sensor temperaturüberwacht. Der temperaturüberwachte Sensor hat den Vorteil, dass durch eine Änderung der Temperatur der Lagerungseinrichtung bedingte Widerstandsänderung des Sensors bei einer Auswertung der Sensorsignale besser kompensierbar ist. Beispielsweise kann zu diesem Zweck eine Eichkurve für einen Sensor verwendet werden, welche für einen festen Wert der Lageraufstandskraft den Widerstandswert des Sensors in Abhängigkeit der Sensortemperatur angibt.

Gemäß der Erfindung wird auch ein Rotorsystem mit einem Rotor und mehreren Lagerungseinrichtungen zum Lagern der Rotorwelle des Rotors geschaffen, wobei die Rotorwelle statisch überbestimmt gelagert ist und mindestens eine der Lagerungseinrichtungen eine der oben beschriebenen erfindungsgemäßen Lagerungseinrichtungen ist.

Ferner wird ein Verfahren geschaffen zum Ermitteln der statischen und/oder dynamischen Lageraufstandskräfte der Wellenlager einer statisch überbestimmt gelagerten Welle, die mittels einer oder mehrerer der erfindungsgemäßen Lagerungseinrichtungen gelagert ist, wobei bei dem Verfahren die Lageraufstandskraft mittels mindestens eines der piezoresistiven Sensoren, der in der Abstützstruktur einer der Wellenlager im Kraftflussbereich integriert eingebracht ist, elektrisch abgegriffen wird. Gemäß einem Ausführungsbeispiel der Erfindung wird das Verfahren angewandt bei einem mehrfach gelagerten Rotorsystem mit einem Rotor und einer Rotorwelle zum Antreiben des Rotors.

Ferner wird ein Steuerungssystem zum Überwachen der statischen und/oder dynamischen Lageraufstandskräfte der Wellenlager einer einfach oder mehrfach statisch überbestimmt gelagerten Welle geschaffen, wobei die Welle mittels einer oder mehrerer der erfindungsgemäßen Lagerungseinrichtung gelagert ist. Das Steuerungssystem weist auf eine Ausleseeinheit zum Auslesen der Signale aus mindestens einem piezoresistiven Sensor, der in die Abstützstruktur eines der Wellenlager integriert im Kraftflussbereich eingebracht ist, und eine elektronische Weiterverarbeitungseinheit zum Berechnen der Lageraufstandskräfte aus den von dem mindestens einem piezoresistiven Sensor erhaltenen Signalen. Gemäß einer Weiterbildung der Erfindung weist das Steuerungssystem eine Ausgabeeinheit zum Darstellen der berechneten Lageraufstandkräfte für einen Benutzer auf. Bevorzugt ist das erfindungsgemäße Steuerungssystem mit einem mehrfach gelagerten Rotorsystem koppelbar und ist ferner dazu eingerichtet, die Drehzahl eines Rotors des Rotorsystems in Antwort auf die aus den Sensorsignalen berechneten Lageraufstandskräfte zu steuern. Gemäß einer Weiterbildung der Erfindung weist das erfindungsgemäße Steuerungssystem eine Alarmeinheit auf zum Alarmieren eines Benutzers und zum Feststellen anhand der aus den Sensorsignalen berechneten Lageraufstandskräfte, ob ein kritischer Schwellenwert einer Lageraufstandskraft überschritten wird.

Ferner wird gemäß der Erfindung die Verwendung eines piezoresistiven Sensors zum Bestimmen der Lageraufstandskräfte eines Wellenlagers bereitgestellt, wobei der Sensor in die Abstützstruktur eines Wellenlagers einer Lagerungseinrichtung, wie sie oben beschrieben ist, integriert eingebracht ist. Bevorzugt weist der verwendete Sensor mehrere Sensorplatten oder Sensorscheiben mit mindestens einer auf die Sensorplatten oder -scheiben aufgebrachten Schicht aus amorphen Kohlenstoff (DLC) und eine Kontaktelektrode zwischen den Sensorplatten oder -scheiben zum elektrischen Kontaktieren der mindestens einen Schicht aus amorphen Kohlenstoff auf.

In Folgenden wird ein bevorzugtes Ausführungsbeispiel der Erfindung anhand der beigefügten schematischen Figuren erläutert. Es zeigen:

Figur 1 eine perspektivische Ansicht einer Lagerungseinrichtung gemäß dem erfindungsgemäßen Ausführungsbeispiel der Erfindung;

Figur 2 eine Detailansicht von Komponenten der Lagerungseinrichtung aus dem in Figur 1 gezeigten Ausführungsbeispiel der Erfindung;

Figur 3 eine schematische Ansicht von Komponenten eines piezoresistiven Sensors aus Figur 2;

Figur 4 eine schematische Schnittansicht des Aufbaus des piezoresistiven Sensors aus Figur 2;

Figur 5 eine schematische Ansicht von Komponenten eines piezoresistiven Sensors aus Figur 2;

Figur 6 eine schematische Schnittansicht des Aufbaus des piezoresistiven Sensors aus Figur 2; und

Figur 7 einen Schaltplan einer elektrische Verschaltung eines piezoresistiven Sensors gemäß einem Ausführungsbeispiel der Erfindung.

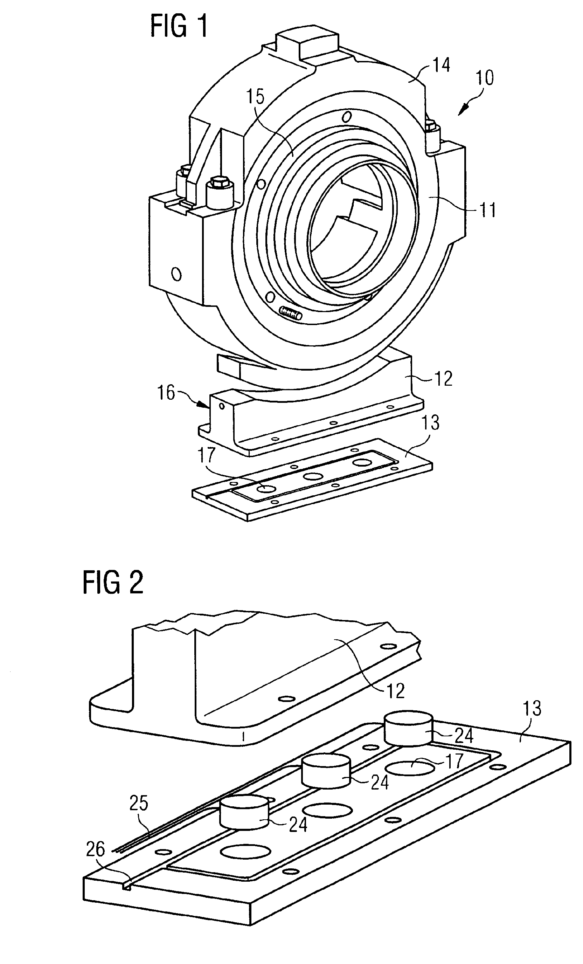

In der folgenden Figurenbeschreibung bezeichnen gleiche Bezugszeichen gleiche Elemente. In den Figuren 1 und 2 wird beispielhaft der Einbau dreier Sensoren in eine Abstützstruktur einer in einem Kraftwerk eingesetzten Hochdruckteilturbine gezeigt. In Figur 1 wird eine perspektivische Ansicht einer Lagerungseinrichtung 10 gemäß einem Ausführungsbeispiel der Erfindung gezeigt. Eine Lagerkonstruktion 11 weist ein Lager 15 auf, das in einer Lageraufnahme 14 gehalten wird. Die Lageraufnahme 14 sitzt auf einer Halterung bzw. einem Lagerstuhl 12, der auf einer Stuhlplatte 13 befestigt ist. Die Lageraufnahme 14, der Lagerstuhl 12 und die Stuhlplatte 13 bilden die Abstützstruktur 16 für das Lager 15 der Lagerungseinrichtung 10. Wie in Figur 1 gezeigt ist, enthält die Stuhlplatte 13 Bohrungen 17, wobei die Bohrungen 17 für piezoresistive Sensoren 24 vorgesehen sind, um die Sensoren 24 integral in die Abstützstruktur 16, hier in die Stuhlplatte 13, einzubringen.

Die Erfindung ist jedoch nicht auf die in Figur 1 gezeigte Lagerkonstruktion 11 bzw. auf eine Lagerkonstruktion mit einem Gleitlager beschränkt, sondern kann auch auf beliebige andere Lagerarten und Lagerkonstruktionen angewandt werden, die für eine Lagerung von rotierenden Wellen geeignet sind.

In Figur 2 wird eine Detailansicht von Komponenten der Lagerungseinrichtung des in Figur 1 beschriebenen Ausführungsbeispiels der Erfindung gezeigt. Gemäß dem in Figur 2 und in Figur 1 gezeigten Ausführungsbeispiel haben die piezoresistiven Sensoren 24 eine zylindrische Form und werden passgenau in die in der Stuhlplatte 13 vorhandenen Bohrungen 17 eingeführt. Dabei sollte die Höhe der piezoresistiven Sensoren 24 im Vergleich zur Tiefe der Bohrungen 17 derart gewählt werden, dass bei zusammengebauter Abstützstruktur ein genügend hoher statischer Druck im Sensormaterial aufgebaut wird. Bevorzugt wird die auf die Sensoren einwirkende Kraft, welche im Betrieb auf die Lagerungseinrichtung einwirkt, derart eingestellt, dass eine genügend hohe mechanische Vorspannung besteht. Wie in Figur 2 gezeigt ist, weist der Lagerstuhl 26 eine Nut 26 auf für eine Zuführung der Leitungen 25 für die elektrischen Anschlüsse zu den piezoresistiven Sensoren 24. Die Leitungen 25 dienen zur Widerstandsmessung. Zusätzlich können Zuführungen (nicht gezeigt) für eine Temperaturmessung vorgesehen sein.

Da die piezoresistiven Sensoren 24 integral in die Stuhlplatte 13 eingepasst sind, üben sie innerhalb der Abstützstruktur 16 eine tragende Funktion aus. Die erfindungsgemäße Abstützstruktur 16 weist daher gegenüber einer herkömmlichen Abstützstruktur ohne integrierte Sensoren im Wesentlichen keine strukturellen Änderungen bzw. Einbußen hinsichtlich der Statik und Dynamik aus, da beispielsweise auch keine zusätzlichen unausgefüllten Hohlräume in der Abstützstruktur 16 der zusammengebauten Lagerungseinrichtung 10 auftreten.

Die Form der Sensoren 24 ist nicht auf die in Figur 2 gezeigte zylindrische Form beschränkt. Beispielsweise sind gemäß einem anderen Ausführungsbeispiel längliche rechteckige bzw. streifenförmige Sensoren vorgesehen, die im Kraftflussbereich der Lagerungseinrichtung senkrecht zur Kraftflussrichtung integral in die Abstützstruktur eingebracht sind.

Gemäß dem Ausführungsbeispiel in den Figuren 1 und 2 sind die Sensoren im eingebauten Zustand vollumfänglich vom Material der Stuhlplatte 13 umgeben, was der Anordnung der Sensoren eine gute Stabilität verleiht. Gemäß einem anderen Ausführungsbeispiel jedoch sind rechteckige piezoelektrische Sensoren zur Bestimmung der Aufstandskraft im Randbereich der Stuhlplatte in einer Bohrung oder einer Aussparung der Stuhlplatte eingesetzt, wobei der Rand der Sensoren und der Rand der Stuhlplatte bündig aneinander ausgerichtet sind.

Gemäß noch einem anderen Ausführungsbeispiel sind die Sensoren ohne Sensorscheiben ausgeführt und sind die piezoresistive Dünnschichten direkt auf die Stuhlplatte aufgebracht, so dass keine tiefen Bohrungen notwendig sind, in denen Sensorscheiben eingebracht werden können, sondern höchstens flache Vertiefungen vorgesehen sind, in denen die Dünnschichten angeordnet sind. Die Dünnschichten sind dabei senkrecht zur Kraftflussrichtung angeordnet.

Obgleich in dem in Figur 1 und 2 gezeigten Ausführungsbeispiel drei Sensoren 24 verwendet werden, kann auch eine höhere oder niedrigere Zahl von Sensoren verwendet werden. In einem anderen Ausführungsbeispiel wird lediglich ein einziger Sensor verwendet, um kritische Überschreitungen eines Kraftflussschwellenwertes zu detektieren. Ferner sind in noch einem anderen Ausführungsbeispiel zur Erhöhung der Detektionsgenauigkeit mehr als drei Sensoren vorgesehen.

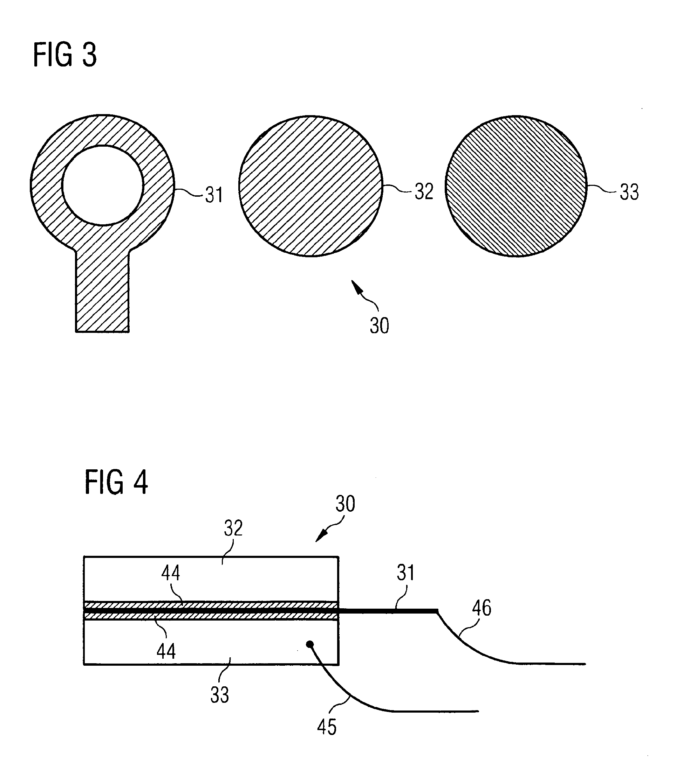

In Figur 3 ist beispielhaft eine schematische Ansicht von Komponenten eines piezoresistiven Sensors 30 gezeigt. Der in Figur 3 gezeigte Sensor 30 entspricht den Sensoren 24 aus Figur 2 und weist kreisrunde Sensorscheiben 32, 33 auf. Wie durch die schraffierte Fläche der Darstellung der Sensorscheiben 32, 33 angedeutet wird, sind die Sensorscheiben 32, 33 mit einem piezoresistiven Material beschichtet, beispielsweise mit Diamond Like Carbon (DLC). Das piezoresistive Material wird elektrisch kontaktiert mit einer Kontaktelektrode 31, die zwischen die beiden Sensorscheiben 32, 33 gelegt wird, so dass die Kontaktelektrode das piezoresistive Material auf den Sensorscheiben 32, 33 berührt.

In Figur 4 wird eine schematische Schnittansicht des Aufbaus des piezoresistiven Sensors gemäß Figur 3 gezeigt. Wie in Figur 4 gezeigt wird, liegt die Kontaktelektrode 31 sandwichartig zwischen den Sensorscheiben 32, 33. Die auf den Sensorscheiben 32, 33 aufgebrachten piezoresistiven Schichten 44 berühren die Kontaktelektrode 31. Die Kontaktelektrode 31 hat eine folienartige Struktur. Gemäß einem bevorzugten Ausführungsbeispiel ist die Kontaktelektrode 31 eine Stahlfolie. Mit den elektrischen Anschlüssen 45 und 46 kann ein elektrischer Widerstand des Sensors 30 gemessen werden.

Dabei wird in der in Figur 4 gezeigten Konfiguration der Widerstand der unteren, auf der Sensorscheibe 33 aufgebrachten piezoresistiven Schicht 44 gemessen. Wird der Anschluss 45 anstatt auf die untere Sensorscheibe 33, wie in Figur 4 gezeigt ist, an die obere Sensorscheibe 32 angelegt, kann der Widerstand der auf die oberen der beiden Schichten 44 gemessen werden.

Gemäß noch einem anderen Ausführungsbeispiel wird auf die Kontaktelektrode 31 verzichtet, und die elektrischen Anschlüsse sind an die obere und an die unter Sensorscheibe 32, 33 angelegt.

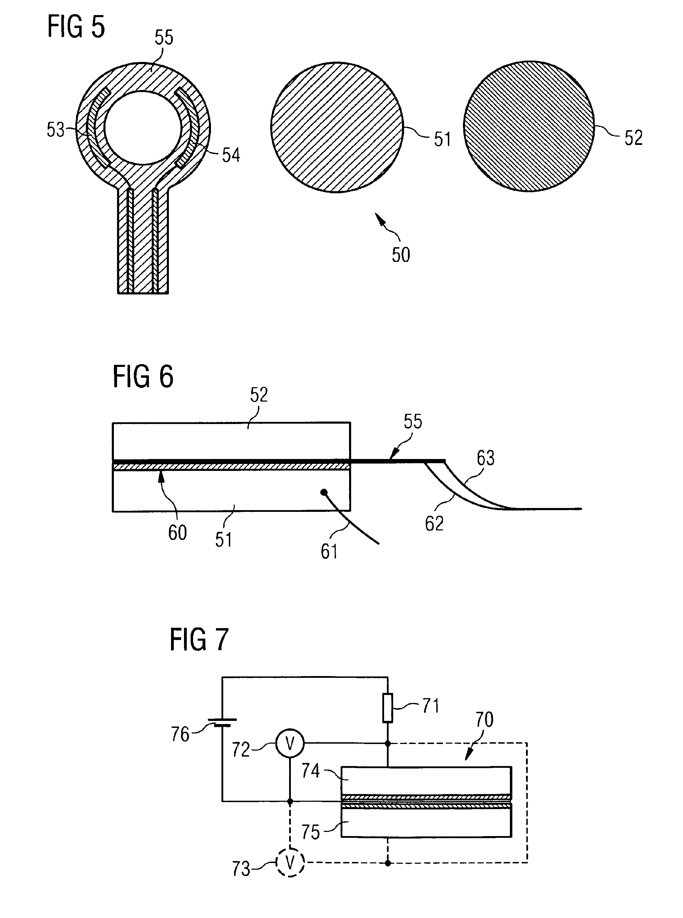

In Figur 5 wird beispielhaft eine schematische Ansicht von Komponenten eines piezoresistiven Sensors 50 gezeigt. Der in Figur 5 gezeigte Sensor 50 entspricht den Sensoren 24 aus Figur 2, wobei jedoch im Unterschied zu dem in Figur 3 beispielhaft gezeigten Sensor 30 der Sensor 50 nur auf einer Sensorscheibe 51 eine Beschichtung eines Materials mit druckabhängigen elektrischen Widerstand hat, wohingegen die zweite Sensorscheibe 52 nicht mit einer solchen piezoresistiven Schicht versehen ist. Zur elektrischen Kontaktierung der piezoresistiven Schicht sind Elektroden 53 und 54 vorgesehen, die auf einem Elektrodenträger 55 aufgebracht sind. Der Elektrodenträger 55 ist im Unterschied zu der Elektrode 31 aus dem Ausführungsbeispiel gemäß Figur 3 und 4 nicht aus elektrisch leitendem sondern aus elektrisch isolierendem Material gefertigt. Beispielsweise ist der Elektrodenträger 55 eine Polyamidfolie. Die Elektrodenstruktur des Sensors der erfindungsgemäßen Lagerungseinrichtung ist aber nicht auf die in Figur 5 gezeigte, die Elektroden 53 und 54 aufweisende Elektrodenstruktur beschränkt. Stattdessen können je nach Anforderungen auch andere Elektrodengeometrien verwendet werden, beispielsweise um die Genauigkeit der Messung hinsichtlich der Ortsabhängigkeit weiter zu optimieren.

In Figur 6 wird eine schematische Schnittansicht des Aufbaus des piezoresistiven Sensors aus Figur 5 gezeigt. Wie in Figur 6 gezeigt wird, wird die auf die Sensorscheibe 51 aufgebrachte piezoresistive Schicht 60, in diesem Ausführungsbeispiel eine DCL-Schicht, mit der Elektrodenträger 55 in Kontakt gebracht. Dabei sind die Elektroden 53, 54 der piezoresistiven Schicht 60 zugewandt, wie aus der in Figur 6 dargestellten Anordnung, bei der die elektrischen Anschlüsse 62, 63 von der Unterseite des Elektrodenträgers bzw. den Elektroden wegführen, ersichtlich ist. Die Sensorscheibe 51 ist mit einem elektrischen Anschluss 61 versehen, um eine Widerstandsmessung der piezoresistiven Schicht 60 zu ermöglichen.

In Figur 7 wird die elektrische Verschaltung eines piezoresistiven Sensors 70 gemäß einem Ausführungsbeispiel der Erfindung gezeigt. Der Sensor 70 weist zwei mit piezoresistiven Schichten beschichtete Sensorplatten 74, 75 auf. Die Sensorplatten 74, 75 bzw. deren piezoresistive Schichten sind mit einer Elektrode 76 elektrisch kontaktiert. Die Elektrode 76 und die Sensorplatten 74 und 75 sind elektrisch miteinander verschaltet gemäß der in Figur 7 gezeigten Anordnung. Die Verschaltung gemäß Figur 7 erlaubt zwei alternative Widerstandsmessungen.

Ein erster Stromkreis, dargestellt mit durchgezogenen Linien, enthält eine Spannungsquelle U, einen Vorwiderstand bzw. Referenzwiderstand 71, und ein Spannungsmessgerät 72. Wenn der erste Stromkreis geschlossen ist, kann mit dem Spannungsmessgerät 72 der elektrische Widerstand $R_{sensor}$ der piezoresistiven Schicht auf der Sensorplatte 74 bzw. der elektrische Widerstand über die Sensorplatte 74 inklusive der darauf aufgebrachten Schicht bestimmt werden nach der Formel:

$$R_{Sensor} = (U_{Sensor} \cdot R_{Ref}) / (U_{SQ} - U_{Sensor}),$$

wobei $U_{Sensor}$ der elektrische Spannungsabfall über die Widerstandsschicht der oberen Sensorscheibe 74 ist, $R_{Ref}$ der elektrische Widerstand des Referenzwiderstands 71 ist, und $U_{SQ}$ die von der Spannungsquelle 76 gelieferte elektrische Spannung ist.

In einem zweiten Stromkreis ist der elektrische Kontakt zur oberen Sensorscheibe 74 unterbrochen (in Figur 7 nicht gezeigt), wobei der Stromkreis durch den in Figur 7 gestrichelt gezeigten Schaltungsteil geschlossen wird. In analoger Anwendung der oberen Formel kann nunmehr mittels des Spannungsmessgeräts 73 der Widerstand der piezoelektrischen Schicht der unteren Sensorplatte 75 bestimmt werden. Durch Messung des Spannungsabfalls über sowohl die untere als auch die obere Schicht kann die Genauigkeit der Messungen erhöht werden.

**Patentansprüche**

1. Lagerungseinrichtung (10) zum Lagern einer Welle, aufweisend ein Lager (15), eine Abstützstruktur (16) zum Abstützen des Lagers (15), und mindestens ein in die Abstützstruktur (16) integriert eingebrachten piezoresistiver Sensor (24, 30, 50), der im Kraftflussbereich der Lagerungseinrichtung (10) angeordnet ist, wobei mit der auf den Sensor (24, 30, 50) einwirkenden Aufstandskraft des Lagers (15) der elektrische Widerstand des Sensors (24, 30, 50) derart beeinflusst ist, dass am Sensor (24, 30, 50) die Aufstandskraft des Lagers (15) elektrisch abgreifbar ist.

2. Lagerungseinrichtung (10) nach Anspruch 1,
wobei der Sensor (24, 30, 50) eine oder mehrere piezoresistive Dünnschichten (44, 60) aufweist.

3. Lagerungseinrichtung (10) nach Anspruch 2,
wobei die eine oder mehrere piezoresistiven Dünnschichten (44, 60) eine Schicht aus amorphen Kohlenstoff (DLC "Diamond Like Carbon") aufweisen.

4. Lagerungseinrichtung (10) nach Anspruch 2 oder 3,
wobei der Sensor (24, 30, 50) eine oder mehrere Sensorplatten (32, 33, 51, 52, 74, 75) oder Sensorscheiben aufweist und die piezoresistiven Dünnschichten (44, 60) auf die Sensorplatten (32, 33, 51, 52, 74, 75) bzw. auf die Sensorscheiben aufgebracht sind.

5. Lagerungseinrichtung (10) nach einem der Ansprüche 2 bis 4,
wobei die Aufstandskraft mittels mindestens einer an den piezoresistiven Dünnschichten (44, 60) anliegenden Kontaktelektrode (55, 76) abgreifbar ist.

6. Lagerungseinrichtung (10) nach einem der Ansprüche 1 bis 5,
wobei der piezoresistive Sensor (24, 30, 50) temperaturüberwacht ist.

7. Rotorsystem mit einem Rotor und mehreren Lagerungseinrichtungen (10) zum Lagern der Rotorwelle des Rotors, wobei die Rotorwelle statisch überbestimmt gelagert ist und mindestens eine der Lagerungseinrichtungen (10) eine Lagerungseinrichtung (10) gemäß einem der Ansprüche 1 bis 6 ist.

8. Verfahren zum Ermitteln der statischen und/oder dynamischen Lageraufstandskräfte der Wellenlager einer statisch überbestimmt gelagerten Welle, die mittels einer oder mehrerer Lagerungseinrichtung (10) gemäß einem der Ansprüche 1 bis 6 gelagert ist, wobei bei dem Verfahren die Lageraufstandskraft mittels mindestens eines piezoresistiven Sensors (24, 30, 50), der in der Abstützstruktur einer der Wellenlager (15) im Kraftflussbereich integriert eingebracht ist, elektrisch abgegriffen wird.

9. Verfahren nach Anspruch 8, angewandt bei einem mehrfach gelagerten Rotorsystem mit einem Rotor und einer Rotorwelle zum Antreiben des Rotors.

10. Steuerungssystem zum Überwachen der statischen und/oder dynamischen Lageraufstandskräfte der Wellenlager einer einfach oder mehrfach statisch überbestimmt gelagerten Welle, die mittels einer oder mehrerer Lagerungseinrichtung (10) gemäß einem der Ansprüche 1 bis 6 gelagert ist, aufweisend eine Ausleseeinheit zum Auslesen der Signale aus mindestens einem piezoresistiven Sensor (24, 30, 50), der in die Abstützstruktur eines der Wellenlager (15) integriert im Kraftflussbereich eingebracht ist, und eine elektronische Weiterverarbeitungseinheit zum Berechnen der Lageraufstandskräfte aus den von dem mindestens einem piezoresistiven Sensor (24, 30, 50) erhaltenen Signalen.

11. Steuerungssystem nach Anspruch 11,
ferner aufweisend eine Ausgabeeinheit zum Darstellen der berechneten Lageraufstandkräfte für einen Benutzer.

12. Steuerungssystem nach Anspruch 10 oder 11,
das mit einem mehrfach gelagerten Rotorsystem koppelbar ist und das ferner dazu eingerichtet ist, die Drehzahl eines Rotors des Rotorsystems in Antwort auf die aus den Sensorsignalen berechneten Lageraufstandskräfte zu steuern.

13. Steuerungssystem nach einem der Ansprüche 10 bis 12, ferner aufweisend eine Alarmeinheit zum Alarmieren eines Benutzers und zum Feststellen anhand der aus den Sensorsignalen berechneten Lageraufstandskräfte, ob ein kritischer Schwellenwert einer Lageraufstandskraft überschritten wird.

14. Verwendung eines piezoresistiven Sensors zum Bestimmen der Lageraufstandskräfte eines Wellenlagers, wobei der Sensor (24, 30, 50) in die Abstützstruktur (16) eines Wellenlagers (15) einer Lagerungseinrichtung (10) gemäß einem der Ansprüche 1 bis 6 integriert eingebracht ist.

15. Verwendung eines piezoresistiven Sensors (24, 30, 50) gemäß Anspruch 14, wobei der Sensor (24, 30, 50) mehrere Sensorplatten oder -scheiben mit mindestens einer auf die Sensorplatten oder -scheiben aufgebrachten Schicht (44, 60) aus amorphen Kohlenstoff (DLC "Diamond Like Carbon") und eine Kontaktelektrode 55, 76) zwischen den Sensorplatten oder - scheiben (32, 33, 51, 52, 74, 75) zum elektrischen Kontaktieren der mindestens einen Schicht (44, 60) aus amorphen Kohlenstoff aufweist.

FIG 1

FIG 2

## FIG 3

31

32

33

30

## FIG 4

30

32

44

31

46

44

33

45

## FIG 5

## FIG 6

## FIG 7

Europäisches
Patentamt

European
Patent Office

Office européen
des brevets

**EUROPÄISCHER RECHERCHENBERICHT**

Nummer der Anmeldung

EP 09 01 4802

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 862 089 A1 (SIEMENS VDO AUTOMOTIVE [FR]) 13. Mai 2005 (2005-05-13)<br>* Seite 3, Zeile 11 - Seite 4, Zeile 9 *<br>* Seite 4, Zeilen 15-16, 22-25; Abbildungen 1,2 *<br>* Seite 4, Zeile 33 - Seite 5, Zeile 5; Abbildung 3 *<br>----- | 1-15 | INV.<br>F16C19/52<br>F16C35/00<br>G01L1/18 |
| X | US 2002/061148 A1 (SALOU ARNAUD [FR] ET AL) 23. Mai 2002 (2002-05-23)<br>* Absätze [0032], [0040] - [0042], [0051], [0064] - [0075], [0091] - [0097]; Abbildungen 1-8 *<br>----- | 1-6, 10-13 | |
| X | US 2009/180722 A1 (DOUGHERTY JOHN D [US] ET AL) 16. Juli 2009 (2009-07-16)<br>* Absätze [0028] - [0031], [0040]; Abbildungen 2-5 *<br>----- | 2-6,11, 13 | |
| A | DE 10 2006 019942 A1 (FRAUNHOFER GES FORSCHUNG [DE]) 31. Oktober 2007 (2007-10-31)<br>* Absätze [0018], [0020], [0022] - [0023], [0025] - [0026], [0033], [0034], [0058], [0061], [0064], [0065]; Abbildungen 1-5,8,9 *<br>----- | 1-6,15 | RECHERCHIERTE SACHGEBIETE (IPC)<br><br>F16C<br>G01L |

Der vorliegende Recherchenbericht wurde für alle Patentansprüche erstellt

| Recherchenort | Abschlußdatum der Recherche | Prüfer |
|---|---|---|
| München | 8. April 2010 | Gutiérrez Royo, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 01 4802

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2010

| Im Recherchenbericht angeführtes Patentdokument | Datum der Veröffentlichung | Mitglied(er) der Patentfamilie | Datum der Veröffentlichung |
|---|---|---|---|
| FR 2862089 A1 | 13-05-2005 | KEINE | |
| US 2002061148 A1 | 23-05-2002 | BR 0103040 A<br>EP 1176409 A1<br>FR 2812356 A1<br>JP 2002098138 A<br>US 2002012484 A1 | 26-02-2002<br>30-01-2002<br>01-02-2002<br>05-04-2002<br>31-01-2002 |
| US 2009180722 A1 | 16-07-2009 | WO 2007103915 A2 | 13-09-2007 |
| DE 102006019942 A1 | 31-10-2007 | EP 2013598 A1<br>WO 2007124940 A1<br>JP 2009535610 T | 14-01-2009<br>08-11-2007<br>01-10-2009 |

EPO FORM P0461

Für nähere Einzelheiten zu diesem Anhang : siehe Amtsblatt des Europäischen Patentamts, Nr.12/82